# EUROPEAN PATENT SPECIFICATION

(11) **EP 0 603 886 B1**
(45) Date of publication and mention of the grant of the patent: **06.08.1997**
(21) Application number: 93120797.1
(22) Date of filing: 23.12.1993
(51) Int. Cl.: C08F 236/10, C08F 4/48

(54) **A method for producing diene polymers and rubber compounds using the same**
Verfahren zur Herstellung von Dienpolymerisaten und die hierbei erhaltene Kautschuckmischungen
Procédé de polymérisation de polymères de diènes et compositions de caoutchouc ainsi obtenues

(30) Priority: 24.12.1992 JP 344660/92; 29.11.1993 JP 297874/93
(43) Date of publication of application: 29.06.1994
(73) Proprietor: Bridgestone Corporation, Tokyo 104 (JP)
(72) Inventor: Shibata, Tadashi, Kodaira-shi, Tokyo (JP); Fujio, Ryota, Akikawa-shi, Tokyo (JP)
(74) Representative: Görg, Klaus, Dipl.-Ing.

(56) References cited:
- EP-A- 0 215 256
- US-A- 3 294 768

## Description

The present invention relates to a method for producing a diene polymer and a rubber composition using the same. More specifically, the present invention relates to a method for providing a conjugated diene polymer and a vulcanizate which have good breaking strength, good wear resistance, and high tan δ.

In general, for tire tread rubbers, and for high performance tire tread rubbers in particular, rubber compositions have been used that have good balance in high wear resistance, good wet skid resistance and dry skid properties, and further those rubber compositions which emphasize steering property, good high speed stability and good durability at high speed.

On the other hand, as the consumers' needs widen, a lot of types of high performance tires have to be made in a smaller scale according to those needs, and it is necessary to provide rubber compositions which lay emphasis on the unique properties of each material. As examples there can be named rubber compositions having remarkable driving grip properties, but not the best wet skid resistance, or those placing emphasis on wear strength or wet skid properties. Recently, for high performance tires, polymers or rubber compositions with good gripping properties, good wear resistance and good durability at high speed are most expected.

To provide these rubber compositions, the relationship between wet skid resistance or dry grip properties and viscoelasticity of rubber compositions has been studied. It has been found that, to improve wet skid resistance, tan δ at 10 to 20 Hz in the lower temperature region, around 0°C in particular, needs to be increased, while to improve driving grip properties, tan δ around 50 to 70°C needs to be increased in order to increase hysteresis loss.

It has also been found that, in order to improve wear resistance and durability at high speed, tensile strength and elongation at break, both at high temperatures around 100°C in particular, need to be improved. The improvement in breaking properties leads to an improvement not only in wear resistance and durability at high speed but also, when combined with a control in compounding, to an improvement in wet skid resistance and in dry grip properties. It would not be an exaggeration to say that most of the other properties can be controlled by improving breaking properties.

As mentioned above, by improving properties, such as breaking properties at high temperature, of the polymer or polymer composition used for a tire tread, the performance of a tire can be improved. Among the ways to improve properties, an existing rubbery polymer or a novel polymer can be used to make a novel composition.

As examples of the former method, a butyl rubber (JPA62-143945), a polynorbornene (JPA62-143945 or JPA2-142838), a polyisoprene (JPA63-132949), or a cumarone-indene resin (JPA62-1735) is added to a butadiene-styrene copolymer. As examples of the latter method, a butadiene-styrene rubber was modified with a diphenylmethyl alcohol derivative (JPA60-61314), a diblock butadiene-styrene copolymer was used as a rubbery component (JPA1-131258), a butadiene-styrene copolymer polymerized by using an organolithium compound and certain organic compounds such as potassium butoxide was used as rubbery component (JPB44-20463), or a butadiene-styrene copolymer polymerized by using a potassium salt as randomizer was used as rubbery component (JPA3-239737).

Even though its target is different from that of the present invention, a butadiene-styrene copolymer having less than 40 % of styrene mono segment and at the most 10 % of styrene block having 8 or more styrene units with a low vinyl linkage in the butadiene portion is disclosed (JPA3-239737). According to this method, if tetrahydrofuran is used to increase the vinyl content, styrene blocks will be broken and the content of styrene mono segments will increase.

But these examples did not give a rubber composition with sufficient properties which can provide satisfying performance as a tire.

EP-A-0 215256 relates to a process for preparing copolymers of a conjugated diene and a vinyl substituted aromatic hydrocarbon (e.g. styrene) wherein the vinyl content is increased by using a randomizing initiation system comprising an organolithium compound and an oxolanyl alkane.

US-3294768 discloses copolymers made from conjugated dienes and vinyl substituted aromatic hydrocarbons displaying blocks of the aromatic hydrocarbon (e.g. styrene) for which catalyst mixtures of an organolithium compound and alkali salts (such as alkoxides or carboxylates or amines) having an alkali metal. other than lithium are used.

The object of the present invention is to provide a method for preparing a conjugated diene polymer which has good breaking strength, wear resistance and high tan δ as vulcanizates, and to provide a rubber composition using the same.

The solution of the first part of the above object is represented by a method for providing a conjugated diene polymer wherein a conjugated diene monomer an an aromatic vinyl hydrocarbon monomer are copolymerized in a hydrocarbon solvent with an organolithium compound as an initiator by the presence of an organopotassium compound selected from the group consisting of compounds classified under the general formulae of R¹K, R²OK, R³COOK and R⁴R⁵NK (wherein R¹, R², R³, R⁴, R⁵ are selected from the group consisting of C₁ to C₂₀ alkyl groups, C₃ to C₂₀ cycloalkyl groups, C₂ to C₂₀ alkenyl groups, C₅ to C₂₀ aryl groups, phenyl groups, wherein said groups may include substituents) and a monomer, an oligomer or a polymer of an oxolanyl alkane.

The second part of the above object is solved by a rubber composition which contains 20 to 100 parts by weight per 100 parts by weight rubber of a conjugated diene polymer obtainable by the above method, 50 to 150 parts by weight per 100 parts by weight rubber of a carbon black, 30 to 200 parts by weight per 100 parts by weight rubber of a process oil and, optionally, not more than 100 parts by weight per 100 parts by weight rubber of a liquid polymer.

The inventors carried out an intensive study on the relationship between the microstructure of a styrene block and the properties of a resulting rubber composition and found that by adding a monomeric, oligomeric or polymeric oxolanyl alkane (OAS) to a polymerization system with a potassium salt as randomizer and a lithium compound as an initiator, it becomes possible to control the microstructure of the resulting polymers to give desirable properties. A polymer with a desirable microstructure has at the most 10 % of content of the styrene chemical block with eleven or more of continous styrene units based on the total bound styrene and 20 to 50 % of content of vinyl linkage (vinyl content) in the butadiene portion while the content of the styrene microblock which has 4 to 10 of continuous styrene units is less than 11 % based on the total bound styrene. According to preferred embodiments the content of vinyl linkage is at least 45%, and the content of styrene chemical block is at most 8%, respectively. Modifying a resulting polymer with a modifier such as silicon tetrachloride gives a high molecular weight polymer which has a weight average molecular weight of 70 x 10⁴ or more. The rubber composition comprising this modified polymer and a carbon black as a filler shows excellent properties as a high performance tire.

It has been found that the styrene blocks in a polymer may have different numbers of styrene units, and the sizes of these blocks strongly affect properties of a resulting polymer. The microblocks of styrene, in particular, give improved wear resistance and breaking properties to a resulting polymer. It is also known that the vinyl content in the butadiene portion should be kept at at least 40 % in order to improve low heat generation properties. These two properties can not be achieved at the same time as long as a lot of tetrahydrofuran is used as usual, since the larger the amount of tetrahydrofuran used, the higher the content of styrene mono segment obtained.

The inventors used an OAS instead of tetrahydrofuran with a potassium salt so that the styrene microblocks can be maintained without decreasing the vinyl content.

The organopotassium compound used in the present invention can be selected from the group consisting of compounds classified under the following general formulae of R¹K, R²OK, R³COOK and R⁴R⁵NK (wherein R¹, R², R³, R⁴, R⁵ are C₁ to C₂₀ alkyl groups, C₃ to C₂₀ cycloalkyl groups, C₂ to C₂₀ alkenyl groups, C₅ to c₂₀ aryl groups, phenyl groups wherein said groups may include substituents).

Examples of the compounds classified under the general formula R¹K are ethyl potassium, tert.-amyl potassium, 3-hexenyl potassium, phenyl potassium, 4-tolyl potassium.

Examples of the compounds classified under the general formula R²OK are potassium salts of monovalent or multivalent alcohols or phenols, more specifically, potassium salts of methyl alcohol, ethyl alcohol, n-propyl alcohol, isopropyl alcohol, tert.-butyl alcohol, tert.-amyl alcohol, n-hexyl alcohol, cyclohexyl alcohol, 2-butenyl alcohol, 4-methyl cyclohexenyl alcohol, 3-cyclopentenyl alcohol, 3-hexenyl alcohol, 2,5-decadienyl alcohol, allyl alcohol, 1,3-dihydroxyhexane, 1,5,9-trihydroxytridecane, benzyl alcohol, phenol, catechol, resorcinol, hydroquinone, pyrogallol, 1-naphthol, 2-naphthol, 2,6-di-tert.-butyl-4-methyl phenol, 2,4,6-tri-tert.-butyl phenol, n-nonyl phenol, 1,12-dodecanediol.

Examples of the compounds classified under the general formula R3COOK are potassium salts of monovalent or multivalent carboxylic acids, more specifically, potassium salts of lauric acid, myristylic acid, palmitic acid, stearic acid, arachic acid, linoleic acid, linolenic acid, phenyl acetic acid, benzoic acid, sebacic acid, phthalic acid, 1,8,16-hexadecane tricarboxylic acid.

Examples of the compounds classified under the general formula R⁴R⁵NK are potassium salts of secondary amines, more specifically, potassium salts of dimethylamine, di-n-butylamine, methyl-n-hexyl amine, di(3-hexenyl)amine, diphenyl amine, dibenzylamine.

The amount of the potassium compound used is preferably 0.025 to 0.5 moles per 1 mole of the organolithium compound, more preferably, 0.030 to 0.1 moles per 1 mole of the organolithium compound. If the amount of the potassium compound is outside of this preferred range, the content of the styrene chemical block may become too high, resulting in a decrease of favorable properties.

The OAS used for the present invention can be a monomer or a polymer of an oxolanyl alkane itself, or a mixture of them. The most preferable OAS is 2,2-di(2-tetrahydrofuryl) propane.

The amount of OAS is preferably less than 1.5 mole equivalents (as hetero atom) per 1 mole of the organolithium compound, more preferably, 0.1 mole equivalents or more to less than 1.5 mole equivalents, most preferably, 0.3 mole equivalents or more to less than 1.0 mole equivalents. The vinyl content in the butadiene portion of the polymer can be controlled by changing the amount of OAS . When the amount of OAS is more than 1.5 mole equivalents, the vinyl content in the butadiene portion becomes over 50 % and the glass transition temperature of the polymer becomes very high, resulting in a decrease of favorable properties. On the other hand, when the amount of OAS is less than 0.1 mole equivalents, the glass transition temperature is very low and the heat resistance may be lowered.

Any solvents stable against the organolithium compound can be used for the present invention. Examples are aromatic hydrocarbon solvents such as benzene, toluene, xylene, aliphatic hydrocarbon solvents such as n-pentane, n-hexane, n-heptane, cycloaliphatic hydrocarbon solvents such as cyclohexane, or mixtures thereof.

Examples of the organolithium compound used as an initiator for the present invention are alkyl lithium compounds such as ethyl lithium, propyl lithium, n-butyl lithium, sec.-butyl lithium and tert.-butyl lithium, aryl lithium compounds such as phenyl lithium and tolyl lithium, alkenyl lithium compounds such as vinyl lithium and propenyl lithium, or alkylene dilithium compounds such as tetramethylene dilithium, pentamethylene dilithium, hexamethylene dilithium and decamethylene dilithium. Preferable examples are n-butyl lithium and tert.-butyl lithium. Each of these compounds can be used alone as the initiator system or can be used in a mixture of these compounds. Preferably, the amount of these organolithium initiators is 0.2 to 30 millimoles per 100 g of monomer, wherein 0.5 to 10 millimoles per 100g of monomer are more preferable.

The monomers used for the present invention are conjugated dienes and vinyl aromatic hydrocarbons.

The conjugated dienes preferably have 4 to 12 carbons in one molecule, and more preferably, 4 to 8 carbons in one molecule. Examples of the conjugated diene monomer to be used are 1,3-butadiene, isoprene, piperylene, 2,3-dimethyl-1,3-butadiene, 1,3-pentadiene and octadiene, 1,3-butadiene being the most preferable. Each of these monomers can be used alone or in a mixture of these monomers.

Examples of the aromatic vinyl hydrocarbons to be used are styrene, α-methyl styrene, p-methyl styrene, o-methyl styrene, p-butyl styrene and vinyl naphthalene, styrene being the most preferable. Each of these monomers can be used alone or in a mixture of these monomers.

The resulting polymer can be modified after polymerization to result in a higher molecular weight. A coupling agent can be used as a modifier. Examples of the modifier to be used are multivalent silicon compounds such as silicon tetrachloride, methyl trichlorosilane, dimethyl dichlorosilane, monomers, dimers, or trimers of aromatic polyisocyanate compounds such as 2,4-tolylenediisocyanate, diphenylmethanediisocyanate, naphthalene diisocyanate, or aromatic polyvinyl compounds such as 2,4-divinyl benzene and 2,4,6-trivinyl benzene.

An allene compound such as 1,2-butadiene can be added to the polymerization system during the polymerization to avoid gelation.

The polymerization temperature is preferably 0 to 150 °C, more preferably 30 to 100 °C. The monomer concentration in the solution is preferably 5 to 50 %, more preferably 10 to 35 %. When a copolymerization of a conjugated diene and an aromatic vinyl hydrocarbon is carried out, the content of the aromatic vinyl hydrocarbon is preferably 3 to 50 weight %, more preferably 5 to 45 weight %.

The pressure in the polymerization system should be high enough to maintain the liquid phase, since the polymerization is carried out by contacting the monomers with the initiator in the liquid phase. The pressure is preferably 0.5 to 10 kg/cm², more preferably 1 to 5 kg/cm². Preferably, impurities which might deactivate initiators are removed from all the reagents used for polymerization before use.

The polymerizations can be carried out by either batch system or continuously, at constant temperature or adiabatically.

The polymer obtained by the present invention preferably has 25 to 50 weight %, more preferably 30 to 45 weight %, of bound styrene, at least 50 %, preferably at least 60 %, of styrene microblocks based on total bound styrene, less than 10 %, preferably less than 8 %, of styrene chemical blocks based on total bound styrene, and 20 to 50 %, preferably 30 to 40 %, of vinyl content in the butadiene portion. When the bound styrene content exceeds 50 weight % or the vinyl content in the butadiene portion exceeds 50 weight %, the glass transition temperature of the polymer becomes very high and the wear resistance and the low temperature properties may be affected. When the bound styrene content becomes less than 25 weight %, the breaking properties may be lower. And when the vinyl content in the butadiene portion is less than 20 weight %, the heat resistance may be lowered.

The molecular weights of the polymers obtained by the present invention are preferably 70 x 10⁴ to 200 x 10⁴, more preferably 90 x 10⁴ to 150 x 10⁴. When the molecular weight is less than 70 x 10⁴, the breaking strength and the wear resistance are relatively low, and when the molecular weight is over 200 x 10⁴, the dispersion of carbon black is poor, which also leads to a lower breaking strength and a lower wear resistance.

After polymerization, a softener such as an aromatic oil and or a liquid polymer can be added to the polymer obtained as extending oil before the solvent is removed. The solvent can be removed by drying polymers directly or by steam stripping.

The polymer obtained by the present invention can be blended with natural rubber or with other diene rubber to be used in a rubber composition. Examples of the other diene rubbers to be used for blending are polyisoprenes, solution polymerized butadiene-styrene copolymers, emulsion polymerized butadiene-styrene copolymers, polybutadienes, ethylene-propylene-diene copolymers, chloroprenes, halogenated butyl rubbers and acrylonitrile-butadiene rubbers. The content of the other diene rubber can be 0 to less than 80 weight %. When the content of the polymer obtained by the present invention is less than 20 weight %, that is, the content of the other diene rubber is 80 weight % or more, no significant improvements in the properties of vulcanizates can be observed.

The amount of the carbon black used for the rubber composition of the present invention is preferably 50 to 150 parts by weight per 100 parts by weight rubber. When the amount of carbon black is less than 50 parts by weight per 100 parts by weight rubber, the tensile strength may be too low, and when it is more than 150 parts by weight per 100 parts by weight rubber, the wear resistance and the processability may be too low. The properties of a preferable type of carbon black are 70 m² / g or more of N₂ SA (Nitrogen Surface Area), 70 to 150 ml / 100 g of DBP (amount of absorbed dibutyl phtalate oil), which include HAF (high abrasion furnace), ISAF (intermediate super abrasion furnace) and SAF (super abrasion furnace). When N₂ SA of the carbon black is not at least 70 m² / g, the breaking strength and the wear resistance of the vulcanizates are relatively low.

To vulcanize the rubber compositions, 0.1 to 5 parts by weight per 100 parts by weight rubber of a vulcanizing agent, in particular sulfur can be used. The preferable amount of sulfur is 1 to 2 parts by weight per 100 parts by weight rubber. When the amount of sulfur is less than 0.1 parts by weight per 100 parts by weight rubber, the tensile strength, the wear resistance and the hysteresis loss property of the vulcanizate are low, and when more than 5 parts by weight per 100 parts by weight rubber are used, the vulcanizate loses some of its elasticity.

The total amount of the process oil and the liquid polymer should be 30 to 200 parts by weight per 100 parts by weight rubber, preferably, 60 to 120 parts by weight per 100 parts by weight rubber. When the amount is outside of the above range, the processability may become too low.

As a process oil to be used, paraffinic, naphthenic, aromatic process oils, and the like can be used. The aromatic oils are the most preferable.

The amount of the process oil used for the polymerization is 30 to 200 parts by weight per 100 parts by weight rubber, preferably 60 to 100 parts by weight per 100 parts by weight rubber. When the amount of the process oil exceeds 200 parts by weight per 100 parts by weight rubber, the tensile strength of the vulcanizate may decline drastically.

As a liquid polymer, liquid polybutadiene rubber, liquid polyisoprene rubber, liquid butadiene-styrene rubber, and the like can be used. Liquid butadiene-styrene rubber is the most preferable.

The amount of the liquid polymer is preferably not more than 100 parts by weight. When the amount of the liquid polymer exceeds 100 parts by weight per 100 parts by weight rubber, the tensile strength of the vulcanizate may decline drastically. More preferably, the amount of the liquid polymer is 20 to 60 parts by weight per 100 parts by weight rubber.

Any kind of accelerator, preferably thiazole type accelerators such as M (2-mercaptobenzothiazole), DM (dibenzothiazyldisulfide), and CZ (N-cyclohexyl-2-benzothiazylsulfenamide), or guanidine type accelerators such as DPG (diphenylguanidine), can be used for the present invention.

The amount of the accelerators used is preferably 0.1 to 5 parts by weight per 100 parts by weight rubber, more preferably 0.2 to 3 parts by weight.

Besides conventional antioxidants or carbon black, fillers and additives such as silica, calcium carbonate, titanium oxide, zinc oxide, stearic acid, antioxidants, or antiozonant can be added.

The rubber composition of the present invention can be obtained by mixing in a mixer such as a roll mixer or an internal mixer. The resulting composition can be molded into tire parts such as a tread, an under tread, a carcass, a side wall, and a bead, or other industrial materials such as a rubber vibration isolator and a hose. It can most suitably be used for a tire tread.

### Examples

The present invention will be explained in more detail by the following examples but will not be restricted by these examples.

In the examples, parts and percentages are by weights unless noted otherwise.

Measurements are made as follows.

The number average molecular weight of polymers (Mn) are measured by the gel permeation chromatography (G.P.C. HLC-8020 manufactured by Toso with series of two GMH-XL type columns) and calculated by differential refractive index (RI) and UV absorption at 254 nm reduced to polystyrene. A monodispersed styrene was used as standard.

The microstructures of the butadiene part of the styrenebutadiene copolymer were measured by the infrared method according to D. Morero, Chem. e. Ind., Vol. 41, Page 758 (1959). The content of styrene was obtained from the absorption intensity of the aromatic hydrogens by NMR spectroscopy.

The tensile properties were measured according to Japanese Industrial Standard K6301.

As a standard for grip properties, tan δ, which is an index for heat generation, is used. To measure tan δ an apparatus for measurement of viscoelasticity (manufactured by Rheometrix Co.) was used. The conditions under which the measurements were carried out are a temperature at 50 °C, a strain at 1 %, and a frequency of 15 Hz.

The wear resistance was measured with a DIN abrasion tester at room temperature, and the data are shown as indices against control.

The heat resistance was measured as reversion by Rheometer (manufactured by Monsanto) at 230 °C, and the data are shown as indices against control.

### Example 1

In a pressure resisting 5 L reactor with a heating jacket 25% styrene solution in 700 g of cyclohexane and 15% butadiene solution in 2170 g of cyclohexane were fed to obtain a monomer solution. After the temperature had reached 50 °C, 0.028 g of 2,2-di(2-tetrahydrofuryl)propane, 0.019 g of potassium tert.-amyloxide (tert-AmOK), and 0.19 g of n-butyllithium were added to start polymerization. The polymerization was carried out for about 3 hours in the temperature range of 50 to 80 °C. After the polymerization was completed, the polymers were modified with 0.13 g of silicon tetrachloride for about 1 hour. To the solution mixture, 60 parts of aromatic oil was added, then the solvent was removed from the mixture and the mixture was dried in the conventional way to obtain polymer A. The polymerization recipe and the properties of the resulting polymer are shown in table 1 and table 2, respectively.

The polymer A was incorporated into a composition according to the recipe in table 3 without blending with other rubbers, then vulcanized at 145°C for 33 min. The properties of the resulting rubber composition are shown in table 4.

### Examples 2, 3

Examples 2 and 3 were carried out by the same method as given in example 1 with the exception that the amount of 2,2-di(2-tetrahydrofuryl)propane was changed to 0.084 g and 0.14 g to obtain polymer B and C, respectively. The polymerization recipe and the properties of the polymers and polymer compositions are shown in table 1, table 2 and table 4, respectively.

### Examples 4, 5, 6

Examples 4, 5 and 6 were carried out by the same method as in example 2 except that the amount of tert.-AmOK was changed to 0.025 g, that 0.017 g of potassium tert.-butoxide (tert.-BuOK) were used, and that 0.47 g of potassium triphenylmethoxide were used instead of tert.-AmOK to obtain polymers D, E, and F, respectively. The polymerization recipe and the properties of the polymers and polymer compounds are shown in table 1, table 2 and table 4, respectively.

### Examples 7, 8

Examples 7 and 8 (in order to obtain polymers G and H) were carried out by the same method as in example 2 except that the amount of monomer solutions were changed to 600 g of styrene solution and 2330 g of butadiene solution, and 900 g of styrene solution and 1830 g of butadiene solution, respectively.

### Comparative example 1

Comparative example 1 was carried out by the same method as in example 1 except that no 2,2-di(2-tetrahydrofuryl)propane was added to obtain polymer I. The polymerization recipe and the properties of the polymer and rubber composition obtained are shown in table 1, table 2 and table 4, respectively.

### Comparative examples 2, 3

Comparative examples 2 and 3 (in order to obtain polymers J and K, respectively) were carried out by the same method as in example 1 except that 13.0 g and 1.1 g of tetrahydrofuran were added instead of 2,2-di(2-tetrahydrofuryl)propane, respectively. The polymerization recipe and the properties of the polymer and rubber compositions obtained are shown in table 1, table 2 and table 4, respectively.

### Comparative example 4 (control)

Comparative example 4 (in order to obtain polymer L) was carried out by the same method as in comparative example 2 except that no organopotassium compound was added. The polymerization recipe and the properties of the polymer and rubber composition obtained are shown in table 1, table 2 and table 4, respectively.

### Examples 9, 10, 11

Examples 9, 10, and 11 were carried out by the same method except that another butadiene-styrene random copolymer was blended with polymer B with the proportions shown in table 5. The properties of the vulcanizates are shown in table 6.

### Comparative examples 5, 6, 7

Comparative examples 5, 6, and 7 were carried out by the same method as in examples 9, 10 and 11, respectively, except that the polymer L was used instead of polymer B. The properties of the vulcanizates are shown in table 6.

### Comparative example 8

Comparative example 8 was carried out by the same method as in example 9 except that only the other butadiene-styrene random copolymer was used as rubber component. The properties of the vulcanizates are shown in table 6.

**Table 1**

| Polymers | Content of Styrene (%) | Content of Butadiene (%) | ROK | | Complexing Agents | |
|---|---|---|---|---|---|---|
| | | | Types | Amount (mmol) | Types | Amount (Eq./Li) |
| A (E) | 35 | 65 | t-AmOK | 0.15 | OAS | 0.1 |
| B (E) | 35 | 65 | t-AmOK | 0.15 | OAS | 0.3 |
| C (E) | 35 | 65 | t-AmOK | 0.15 | OAS | 0.5 |
| D (E) | 35 | 65 | t-AmOK | 0.20 | OAS | 0.3 |
| E (E) | 35 | 65 | t-AmOK | 0.15 | OAS | 0.3 |
| F (E) | 35 | 65 | t-AmOK | 0.15 | OAS | 0.3 |
| G (E) | 30 | 70 | t-AmOK | 0.15 | OAS | 0.3 |
| H (E) | 45 | 55 | t-AmOK | 0.15 | OAS | 0.3 |
| I (CE) | 35 | 65 | t-AmOK | 0.15 | - | - |
| J (CE) | 35 | 65 | t-AmOK | 0.15 | THF | 60 |
| K (CE) | 35 | 65 | t-AmOK | 0.15 | THF | 5 |
| L (CE) | 35 | 65 | - | - | THF | 60 |
| E : examples CE : comparative examples | | | | | | |

**Table 2**

| | Polymers | Molucular weight | | Micro structures (%) | | | |
|---|---|---|---|---|---|---|---|
| | | Mw (× 10⁴) | Mw/Mn | Vinyl contents in butadiene portion | Styrene Portion | | |
| | | | | | Total | micro block | chemical block |
| E 1 | A | 113 | 1.75 | 30 | 35 | 65 | 7 |
| E 2 | B | 114 | 1.79 | 40 | 34 | 68 | 8 |
| E 3 | C | 108 | 1.90 | 47 | 36 | 72 | 5 |
| E 4 | D | 115 | 1.76 | 42 | 35 | 66 | 8 |
| E 5 | E | 111 | 1.71 | 41 | 35 | 62 | 5 |
| E 6 | F | 110 | 1.87 | 40 | 35 | 63 | 8 |
| E 7 | G | 107 | 1.86 | 39 | 30 | 60 | 6 |
| E 8 | H | 98 | 1.86 | 40 | 45 | 79 | 9 |
| CE 1 | I | 93 | 1.66 | 17 | 37 | 67 | 9 |
| CE 2 | J | 82 | 1.98 | 41 | 34 | 31 | 15 |
| CE 3 | K | 105 | 2.00 | 25 | 35 | 35 | 18 |
| CE 4 | L | 116 | 1.67 | 40 | 35 | 30 | 17 |

The vinyl contents were calculated on the basis of a total butadiene portion of 100 %.
The molecular weights were reduced to styrene.
E : examples
CE: comparative examples
Mw: weight average molecular weight
Mn: number average molecular weight

**Table 3**

| | |
|---|---|
| SBR | 100 parts |
| Carbon black (ISAF) | 90 |
| Aromatic Oil | 60 |
| Stearic acid | 1 |
| Antioxidant^{*1} | 1 |
| ZnO2 | 2.5 |
| Antioxidant^{*2} | 0.2 |
| Accelerator^{*3} | 0.2 |
| Accelerator^{*4} | 0.6 |
| Sulfur | 1.8 |

| | |
|---|---|
| *1 N-(1,3-dimethyl-butyl)-N'-phenyl-p-phenylenediamine | |
| *2 Mixed diaryl-p-phenylene diamine | |
| *3 1,3-diphenylguanidine | |
| *4 Tetramethyl thiuramdisulfide | |

**Table 4**

| | Polymers | Elongation (%) | | Tensile strength (Kgf/cm²) | | tanδ 50 °C | DIN wear resistance | Heat resistanc 230 °C |
|---|---|---|---|---|---|---|---|---|
| | | R.T. | H.T. | R.T. | H.T. | | | |
| E 1 | A | 491 | 366 | 254 | 115 | 0.421 | 118 | 95 |
| E 2 | B | 463 | 329 | 244 | 110 | 0.432 | 109 | 103 |
| E 3 | C | 473 | 337 | 240 | 97 | 0.443 | 103 | 112 |
| E 4 | D | 518 | 378 | 257 | 120 | 0.418 | 121 | 99 |
| E 5 | E | 532 | 356 | 260 | 123 | 0.415 | 117 | 95 |
| E 6 | F | 515 | 349 | 242 | 118 | 0.420 | 116 | 96 |
| E 7 | G | 494 | 336 | 239 | 105 | 0.398 | 122 | 97 |
| E 8 | H | 494 | 426 | 259 | 126 | 0.432 | 104 | 94 |
| CE 1 | I | 552 | 453 | 244 | 122 | 0.316 | 128 | 71 |
| CE 2 | J | 474 | 338 | 173 | 91 | 0.410 | 89 | 99 |
| CE 3 | K | 460 | 302 | 215 | 109 | 0.352 | 116 | 86 |
| CE 4 | L | 452 | 274 | 209 | 90 | 0.378 | 100 | 100 |

The DIN wear resistance was calculated with regard to comparative example 4 set to 100 in index.
The heat resistance was calculated with regard to comparative example 4 set to 100 in index.
E : examples
CE : comparative examples
R.T. : room temperature (20°C)
H.T. : high temperature (100°C)

**Table 5**

| | Polymers in Table 1 | | R-SBR Polymer for blending Amount |
|---|---|---|---|
| | No. | Amount | |
| E 9 | B | 80 | 20 |
| E 10 | B | 50 | 50 |
| E 11 | B | 20 | 80 |
| CE 5 | L | 80 | 20 |
| CE 6 | L | 50 | 50 |
| CE 7 | L | 20 | 80 |
| CE 8 | none | 0 | 100 |

Amounts are shown in parts .
E : examples
CE : comparative examples
R-SBR : butadiene-styrene random copolymer

**Table 6**

| | Polymers | Elongation (%) | | Tensile strength (Kgf/cm²) | | tanδ 50 °C | DIN wear strength | Heat resistance 230 °C |
|---|---|---|---|---|---|---|---|---|
| | | R.T. | H.T. | R.T. | H.T. | | | |
| E 9 | B | 459 | 330 | 250 | 109 | 0.427 | 110 | 98 |
| E10 | B | 442 | 329 | 245 | 114 | 0.425 | 110 | 95 |
| E11 | B | 455 | 334 | 248 | 107 | 0.424 | 109 | 94 |
| CE 5 | L | 450 | 283 | 211 | 90 | 0.390 | 103 | 94 |
| CE 6 | L | 444 | 290 | 215 | 89 | 0.388 | 100 | 90 |
| CE 7 | L | 432 | 303 | 215 | 85 | 0.379 | 105 | 92 |
| CE 8 | none | 452 | 295 | 222 | 88 | 0.378 | 101 | 70 |

The DIN wear resistance was calculated with regard to comparative example 4 set to 100 in index.

The heat resistance was calculated with regard to comparative example 4 set to 100 in index.
E : examples
CE : comparative examples
R.T.: room temperature (20°C)
H.T.: high temperature (100°C)

As shown in tables 4 and 6, by changing the amount of OAS within the range of the present invention and with the presence of tert.-AmOK in the range of the present invention, the vinyl content in the butadiene portion can be controlled at a high level while maintaining the content of the styrene micro blocks, which gives the polymers the desirable molecular weights and desirable micro structures.

Similar results were obtained by changing the types of the potassium compound.

On the other hand, the polymer prepared without any OAS (comparative example 1), the polymers prepared with tetrahydrofuran instead of an OAS (comparative examples 2 and 3), or the polymer prepared with tetrahydrofuran instead of an OAS and without the presence of any tert.-AmOK (comparative example 4) did not have high vinyl contents in the butadiene portion and high styrene micro block contents at the same time.

It was furthermore found that the vulcanizates including polymers obtained by using potassium salts and an OAS have much better properties such as elongation, tensile strength, tan 6, or wear resistance compared to conventional polymers. In particular, as shown in examples 2 and 3, a good heat resistance can be achieved by heightening the vinyl content in the butadiene portion and maintaining the content of the styrene micro blocks. And as shown in example 8, when the content of the styrene micro blocks is high, the tensile strength at higher temperatures is improved remarkably, which can result in the improvement of various properties of a tire at high temperature.

It was also found that rubber compositions made by polymers without a high styrene micro block content or high vinyl content in the butadiene portion (comparative examples 1, 2, 3, and 4) can not have a good balance of the properties needed for a high performance tire.

Furthermore, as shown in examples 9, 10, and 11, the vulcanizates made of polymer blends of conventional polymers and polymers obtained by this invention have better properties compared to those of comparative examples 5, 6, 7, and 8.

This improvement was obtained when the rubber compositions have 20 or more parts of the polymer of the present invention.

As described in this specification, when a rubber composition of the present invention is used for a tire tread, the tire has a good balance of durability at higher temperatures, grip properties, and wear strength.

The polymer of this invention provides a rubber blend having good breaking strength, wear resistance, and high tan δ.

## Claims

1. A process for preparing a conjugated diene polymer, wherein a conjugated diene monomer and an aromatic vinyl hydrocarbon monomer in a hydrocarbon solvent using an organolithium compound as an initiator are copolymerized in the presence of an organopotassium compound selected from the group consisting of compounds classified under general formulae of R¹K, R²OK, R³COOK and R⁴R⁵NK (wherein R¹, R², R³, R⁴, R⁵ are selected from the group consisting of C₁ to C₂₀ alkyl groups, C₃ to C₂₀ cycloalkyl groups, C₂ to C₂₀ alkenyl groups, C₅ to C₂₀ aryl groups and phenyl groups wherein said groups may include substituents) and a monomeric, oligomeric or polymeric oxolanyl alkane.

2. The process according to claim 1 wherein the copolymer is modified after the copolymerization is completed.

3. The process according to claim 2 wherein the modifier is a coupling agent selected from the group consisting of multivalent silane compounds, aromatic polyisocyanate compounds, and aromatic polyvinyl compounds.

4. The process according to any of the preceding claims wherein the potassium compound is selected from the group consisting of ethyl potassium, tert.-amyloxy potassium, potassium laurate, and dimethyl amino potassium.

5. The process according to any of the preceding claims wherein the amount of the potassium compound used is 0.025 to 0.5 mole equivalents per 1 mole of the organolithium compound.

6. The process according to any of the preceding claims wherein the oxolanyl alkane is 2,2-di(2-tetrahydrofuryl)propane.

7. The process according to any of the preceding claims wherein the amount of the oxolanyl alkane is less than 1.5 mole equivalent as hetero atom per 1 mole of the organolithium compound.

8. The process according to any of the preceding claims wherein, as an initiator, a compound selected from the group consisting of n-butyl lithium and sec.-butyl lithium is used.

9. The process according to any of the preceding claims wherein the amount of the initiator used for the polymerization is 0.2 to 30 millimole per 100 g of monomer.

10. The process according to any of the preceding claims wherein the conjugated diene monomer is 1,3-butadiene.

11. The process according to any of the preceding claims wherein the aromatic vinyl monomer is styrene.

12. The process according to any of the preceding claims wherein the temperature at which the polymerization is carried out is 0 to 150 °C.

13. The process according to any of the preceding claims wherein the concentration of the monomer in the solution is 10 to 35 weight %.

14. The process according to any of the preceding claims wherein the content of the aromatic vinyl monomer is 5 to 45 weight % of the total amount of monomers.

15. The process according to any of the preceding claims wherein a softener and/or a liquid polymer is added to the resulting polymer as extending oil before the polymerization solvent is removed.

16. A conjugated rubber composition containing 20 to 100 parts by weight per 100 parts by weight rubber of a conjugated diene polymer obtainable by a process as given in any of the claims 1 to 15, 50 to 150 parts by weight per 100 parts by weight rubber of carbon black, 30 to 200 parts by weight per 100 parts by weight rubber of a process oil.

17. The rubber composition according to claim 16 wherein the carbon black used has N₂SA (Nitrogen Surface Area) of at least 70 m² / g and DBP (amount of absorbed dibutyl phtalate oil) of 70 to 150 ml / 100 g.

18. The rubber composition according to claim 16 wherein 0.1 to 5 parts by weight per 100 parts by weight rubber of a vulcanizing agent is used.

19. The rubber composition according to claim 16 wherein 0.1 to 5 parts by weight per 100 parts by weight rubber of a vulcanization accelerator is used.

20. The rubber composition according to claim 16 wherein not more than 100 parts by weight per 100 parts by weight rubber of a liquid polymer are additionally contained.

## Patentansprüche

1. Verfahren zur Herstellung eines konjugierten Dien-Polymers, worin ein konjugiertes Dien-Monomer und ein aromatisches Vinylkohlenwasserstoff-Monomer in einem Kohlenwasserstoff-Lösungsmittel unter Verwendung einer Organolithium-Verbindung als Initiator in Gegenwart einer Organokalium-Verbindung, ausgewählt aus der Gruppe, bestehend aus Verbindungen die man mit den allgemeinen Formeln R¹K, R²OK, R³COOK und R⁴R⁵NK klassifiziert (worin R¹, R², R³, R⁴, R⁵ ausgewählt werden aus der Gruppe, bestehend aus C₁-C₂₀ Alkyl-Gruppen, C₃-C₂₀-Cycloalkyl-Gruppen, C₂-C₂₀-Alkenyl-Gruppen, C₅-C₂₀-Aryl-Gruppen und Phenyl-Gruppen, worin die besagten Gruppen Substituenten enthalten können), und eines monomeren, oligomeren oder polymeren Oxolanylalkans copolymerisiert werden.

2. Verfahren gemäß Anspruch 1, worin man das Copolymer modifiziert, nachdem die Copolymerisation abgeschlossen ist.

3. Verfahren gemäß Anspruch 2, worin das Modifizierungsmittel ein Kupplungsmittel ausgewählt aus der Gruppe, bestehend aus mehrwertigen Silan-Verbindungen, aromatischen Polyisocyanat-Verbindungen und aromatischen Polyvinyl-Verbindungen ist.

4. Verfahren gemäß einem der vorangehenden Ansprüche, worin die Kalium-Verbindung ausgewählt wird aus der Gruppe, bestehend aus Ethylkalium, tert-Amyloxykalium, Kaliumlaurat und Dimethylaminokalium.

5. Verfahren gemäß einem der vorangehenden Ansprüche, worin die Menge der verwendeten Kalium-Verbindung 0,025 bis 0,5 Moläquivalente pro 1 mol der Organolithium-Verbindung beträgt.

6. Verfahren gemäß einem der vorangehenden Ansprüche, worin das Oxolanylalkan 2,2-Di(2-tetrahydrofuryl)propan ist.

7. Verfahren gemäß einem der vorangehenden Ansprüche, worin die Menge des Oxolanylalkans weniger als 1,5 Moläquivalente als Heteroatom pro 1 mol der Organolithium-Verbindung beträgt.

8. Verfahren gemäß einem der vorangehenden Ansprüche, worin als Initiator eine Verbindung, ausgewählt aus der Gruppe, bestehend aus n-Butyllithium und sek-Butyllithium verwendet wird.

9. Verfahren gemäß einem der vorangehenden Ansprüche, worin die Menge des für die Polymerisation verwendeten Initiators 0,2 bis 30 mmol pro 100 g Monomer beträgt.

10. Verfahren gemäß einem der vorangehenden Ansprüche, worin das konjugierte Dien-Monomer 1,3-Butadien ist.

11. Verfahren gemäß einem der vorangehenden Ansprüche, worin das aromatische Vinyl-Monomer Styrol ist.

12. Verfahren gemäß einem der vorangehenden Ansprüche, worin die Temperatur, bei der man die Polymerisation ausgeführt, 0 bis 150°C ist.

13. Verfahren gemäß einem der vorangehenden Ansprüche, worin die Konzentration des Monomers in der Lösung 10 bis 35 Gew.-% beträgt.

14. Verfahren gemäß einem der vorangehenden Ansprüche, worin der Gehalt des aromatischen Vinyl-Monomers 5 bis 45 Gew.-% der Gesamtmenge der Monomere beträgt.

15. Verfahren gemäß einem der vorangehenden Ansprüche, worin man einen Weichmacher und/oder ein flüssiges Polymer zum resultierenden Polymer als Strecköl gibt bevor man das Polymerisationslösungsmittel entfernt.

16. Konjugierte Kautschukzusammensetzung, enthaltend 20 bis 100 Gew.-Teile eines durch ein Verfahren, wie es in irgendeinem der Ansprüche 1 bis 15 angegeben ist, erhältlichen konjugierten Dien-Polymers pro 100 Gew.-Teilen Kautschuk, 50 bis 150 Gew.-Teile Ruß pro 100 Gew.-Teilen Kautschuk, 30 bis 200 Gew.-Teile eines Prozeßöls pro 100 Gew.-Teilen Kautschuk.

17. Kautschukzusammensetzung gemäß Anspruch 16, worin der verwendete Ruß einen N₂SA-Wert (Stickstoff-Oberfläche) von 70 m²/g und einen DBP-Wert (Menge des absorbierten Dibutylphthtalatöls) von 70 bis 150 ml/100 g hat.

18. Kautschukzusammensetzung gemäß Anspruch 16, worin 0,1 bis 5 Gew.-Teile eines Vulkanisierungsmittels pro 100 Gew.-Teilen Kautschuk verwendet werden.

19. Kautschukzusammensetzung gemäß Anspruch 16, worin 0,1 bis 5 Gew.-Teile eines Vulkanissationsbeschleunigers pro 100 Gew.-Teilen Kautschuk verwendet werden.

20. Kautschukzusammensetzung gemäß Anspruch 16, worin nicht mehr als 100 Gew.-Teile eines flüssigen Polymers pro 100 Gew.-Teilen Kautschuk zusätzlich enthalten sind.

## Revendications

1. Procédé pour préparer un polymère de diène conjugué, dans lequel on fait copolymériser un monomère de type diène conjugué et un monomère de type hydrocarbure aromatique vinylique dans un solvant hydrocarboné en utilisant un composé organolithien comme amorceur, en présence d'un composé organopotassique choisi dans l'ensemble constitué par les composés répondant aux formules générales R¹K, R²OK, R³COOK et R⁴R⁵NK (dans lesquelles R¹, R², R³, R⁴ et R⁵ sont choisis dans l'ensemble constitué par les groupes akyle en C₁-C₂₀, les groupes cycloalkyle en C₃-C₂₀, les groupes alcényle en C₂-C₂₀, les groupes aryle en C₅-C₂₀ et les groupes phényle, dans lesquelles lesdits groupes peuvent porter des substituants), et d'un oxolanylalcane monomérique, oligomérique ou polymérique.

2. Procédé conforme à la revendication 1, dans lequel on modifie le copolymère après que la copolymérisation soit terminée.

3. Procédé conforme à la revendication 2, dans lequel l'agent de modification est un agent de couplage choisi dans l'ensemble constitué par les composés de types silane multivalent, polyisocyanate aromatique et composés polyvinyliques aromatiques.

4. Procédé conforme à l'une quelconque des précédentes revendications, dans lequel le composé de potassium est choisi dans l'ensemble constitué par les éthylpotassium, tert-amyloxypotassium, laurate de potassium et diméthylaminopotassium.

5. Procédé conforme à l'une quelconque des précédentes revendications, dans lequel la quantité de composé de potassium utilisé est comprise entre 0,025 et 0,5 équivalent molaire pour 1 mole de composé organolithien.

6. Procédé conforme à l'une quelconque des précédentes revendications, dans lequel l'oxolanylalcane est le 2,2-di(2-tétrahydrofuryl)propane.

7. Procédé conforme à l'une quelconque des précédentes revendications, dans lequel la quantité d'oxolanylalcane est inférieure à 1,5 équivalents molaires, en termes d'hétéroatomes, pour 1 mole de composé organolithien.

8. Procédé conforme à l'une quelconque des précédentes revendications, dans lequel on utilise comme amorceur un composé choisi dans l'ensemble constitué par les n-butyllithium et sec-butyllithium.

9. Procédé conforme à l'une quelconque des précédentes revendications, dans lequel la quantité de l'amorceur utilisé pour la polymérisation est comprise entre 0,2 et 30 mmoles pour 100 g de monomère.

10. Procédé conforme à l'une quelconque des précédentes revendications, dans lequel le monomère de type diène conjugué est le 1,3-butadiène.

11. Procédé conforme à l'une quelconque des précédentes revendications, dans lequel le monomère vinylique aromatique est le styrène.

12. Procédé conforme à l'une quelconque des précédentes revendications, dans lequel la température à laquelle on effectue la polymérisation est comprise entre 0 et 150° C.

13. Procédé conforme à l'une quelconque des précédentes revendications, dans lequel la concentration du monomère dans la solution est comprise entre 10 et 35 % en poids.

14. Procédé conforme à l'une quelconque des précédentes revendications, dans lequel la teneur en monomère vinylique aromatique est comprise entre 5 et 45 % en poids de la quantité totale de monomères.

15. Procédé conforme à l'une quelconque des précédentes revendications, dans lequel on ajoute au polymère résultant un plastifiant et/ou un polymère liquide, comme huile de dilution avant que le solvant de polymérisation ne soit éliminé.

16. Composition de caoutchouc conjugué contenant de 20 à 100 parties en poids, pour 100 parties en poids de caoutchouc, d'un polymère de diène conjugué pouvant être obtenu par un procédé conforme à l'une quelconque des revendications 1 à 15, de 50 à 150 parties en poids, pour 100 parties en poids de caoutchouc, de noir de carbone, de 30 à 200 parties en poids, pour 100 parties en poids de caoutchouc, d'une huile de procédé.

17. Composition de caoutchouc conforme à la revendication 16, dans laquelle le noir de carbone utilisé présente une surface spécifique, mesurée avec de l'azote, d'au moins 70 m²/g et une DBP (quantité d'huile phtalate de dibutyle absorbée) de 70 à 150 ml / 100 g.

18. Composition de caoutchouc conforme à la revendication 16, dans laquelle on utilise de 0,1 à 5 parties en poids, pour 100 parties en poids de caoutchouc, d'un agent de vulcanisation.

19. Composition de caoutchouc conforme à la revendication 16, dans laquelle on utilise de 0,1 à 5 parties en poids pour 100 parties en poids de caoutchouc, d'un accélérateur de vulcanisation.

20. Composition de caoutchouc conforme à la revendication 16, dans laquelle pas plus de 100 parties en poids, pour 100 parties en poids de caoutchouc, d'un polymère liquide sont contenues en supplément.
